# EUROPEAN PATENT APPLICATION

(11) **EP 3 582 353 A1**
(43) Date of publication of application: **18.12.2019**
(21) Application number: 19179908.9
(22) Date of filing: 13.06.2019
(51) Int. Cl.: H02G 11/02, B65H 75/44, B60R 16/027

(54) **FLAT CABLE WINDING DEVICE**

(30) Priority: 15.06.2018 JP 2018114476
(71) Applicant: YAZAKI CORPORATION, Minato-ku, Tokyo 108-8333 (JP)
(72) Inventor: HAMADA, Ryo, Susono-shi, Shizuoka 410-1194 (JP)
(74) Representative: Grünecker Patent- und Rechtsanwälte PartG mbB

(57) **Abstract**

A flat cable winding device includes: a rotation ring positioning a plurality of rollers at an inner circumferential side of the rotation ring, rotating coaxially with a shaft portion formed in a case, and including a circumferential wall portion on which a flat cable wound from outside of the case is wound. The circumferential wall portion includes a notched portion through which the flat cable is routed between an outer circumference side and an inner circumference side of the circumferential wall portion and held. At least one of the plurality of rollers is an inverting roller winding the flat cable wound on the shaft portion and inverting the flat cable toward the notched portion as a rotation table rotates with the shaft portion as a central axis.

## Description

### BACKGROUND

### Technical Field

The present invention relates to a flat cable winding device.

### Related Art

Conventionally, a sliding seat, a sliding door, a movable sunroof, or the like has been used as a moving body which moves with respect to a fixed portion on a vehicle body in a vehicle such as an automobile. For example, electronic devices such as a seating sensor which detects whether or not an occupant is seated, a seatbelt sensor which detects whether or not an occupant wears a seatbelt are mounted in the sliding seat. In this regard, a device which routes a flat cable over a vehicle body and a moving body has been used in a vehicle in which the moving body such as a sliding seat is provided, in order to connect an electronic device provided on the moving body and an electronic device such as a control device provided on the vehicle body.

In such a routing device, a slack portion for movement of the moving body is formed in the flat cable. JP 2004-328985 A discloses a winding device for winding a slack portion of a flat cable to prevent the flat cable from interfering with a moving body or the like.

In the winding device disclosed in JP 2004-328985 A, the flat cable is wound so that a winding direction is reversed by a reversing roller and the flat cable is wound along an inner circumferential surface of a case by a plurality of rollers. The wound flat cable is pressed toward an inner circumference side of the case by a portion of an outer circumferential surface of each roller, and thus the wound flat cable is considered to locally receive a large load. Therefore, a countermeasure for improving durability is demanded.

### SUMMARY

An object of the present invention is to provide a flat cable winding device which is advantageous in improving durability.

A flat cable winding device according to a first embodiment includes: a flat cable; a case in which a first end of the flat cable is wound and accommodated; a shaft portion provided in the case and on which a second end of the flat cable is wound; a rotation table rotating with the shaft portion as a central axis; an energizing member energizing the rotation table in a winding direction of the flat cable; a plurality of rollers arranged in a rotation direction of the rotation table and rotatably supported on the rotation table; and a rotation ring positioning the plurality of rollers at an inner circumferential side of the rotation ring, rotating coaxially with the shaft portion, and including a circumferential wall portion on which the flat cable wound from the outside of the case is wound, wherein the circumferential wall portion includes a notched portion through which the flat cable is routed between an outer circumference side and an inner circumference side of the circumferential wall portion and held, and at least one of the plurality of rollers is an inverting roller winding the flat cable wound on the shaft portion and inverting the flat cable toward the notched portion as the rotation table rotates.

The flat cable may be formed by overlapping the plurality of single flat cables with each other. The circumferential wall portion may include a plurality of the notched portions. Each single flat cable of the plurality of single flat cables may be routed through each notched portion of the plurality of the notched portions in a one-to-one manner. The inverting roller may be equipped plural and the number of inverting rollers may correspond to the number of single flat cables included in the plurality of single flat cables.

The plurality of the notched portions may be formed at equal intervals in a circumferential direction of the circumferential wall portion.

According to the configurations described above, it is possible to provide a flat cable winding device which is advantageous in improving durability.

### BRIEF DESCRIPTION OF DRAWINGS

FIG. 1 is a perspective view of a flat cable winding device according to a first embodiment;
FIG. 2 is an exploded perspective view of the flat cable winding device according to the first embodiment;
FIG. 3 is a cross-sectional view of the flat cable winding device according to the first embodiment;
FIG. 4A is a plan view illustrating an overall shape of a rotation ring according to the first embodiment;
FIG. 4B is a plan view illustrating an enlarged view of a notched portion of the rotation ring according to the first embodiment;
FIG. 5 is a plan view illustrating a wound state according to the first embodiment;
FIG. 6 is a plan view illustrating a drawn state according to the first embodiment;
FIG. 7 is a plan view illustrating a wound state according to a second embodiment;
FIG. 8 is a plan view illustrating a drawn state according to the second embodiment; and
FIG. 9 is a view for describing a flat cable winding device according to the related art.

### DETAILED DESCRIPTION

Hereinafter, embodiments will be described in detail with reference to accompanying drawings. Here, dimensions, materials, specific numerical values, and the like described in the embodiments are merely examples, and the present invention is not limited thereto unless otherwise specified. In addition, elements having substantially the same functions and configurations will be denoted by the same reference numerals to omit overlapping descriptions, and elements not directly related to the present invention will not be illustrated.

Further, in the respective drawings, an installation direction of a flat cable winding device is defined as a Z direction. In the present embodiment, the Z direction is a direction parallel to a vertical direction by way of example. In addition, an X direction and a Y direction perpendicular to the X direction are defined in a plane perpendicular to the Z direction. In the present embodiment, the X direction is a direction in which a flat cable wound on a flat cable winding device is unwound toward the outside.

First, a flat cable winding device (hereinafter, simply referred to as a "winding device") according to a first embodiment will be described. The winding device according to the present embodiment can be applied to, for example, a cable routing device or the like which routes a cable over a vehicle body and a moving body in order to electrically connect an electronic device provided on the vehicle body and an electronic device provided on the moving body in a vehicle in which the moving body which moves with respect to a fixed portion is provided. Hereinafter, the winding device according to the present embodiment is a device which winds a flat cable routed between a vehicle and a sliding seat provided to be slidable on a floor of the vehicle in an automobile, by way of example.

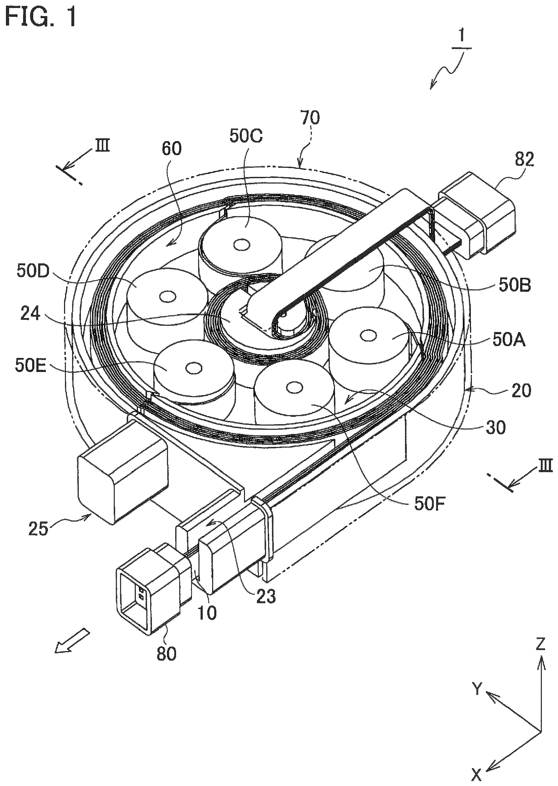

FIG. 1 is a schematic perspective view illustrating a winding device 1 according to the present embodiment. FIG. 1 illustrates the winding device 1 when a flat cable 10 is in a wound state. Although not illustrated, in general, the sliding seat includes a protector guided along a sliding rail. The winding device 1 is provided in the vicinity of the sliding rail, winds the flat cable 10 as the protector approaches, and unwinds the flat cable 10 as the protector moves away.

A first connector 80 is mounted on one end of the flat cable 10. The first connector 80 can move in the X direction. The first connector 80 can be connected to a connector or the like provided on the sliding seat through the protector. The first connector 80 connected to the connector provided on the sliding seat moves as the sliding seat slides. A total length of the flat cable 10 is sufficiently longer than, for example, a sliding distance of the sliding seat.

Meanwhile, a second connector 82 is mounted on the other end of the flat cable 10. The second connector 82 can be drawn out to the outside through the inside of the winding device 1 and connected to, for example, a connector provided on the floor of the vehicle. The second connector 82 connected to the connector provided on the floor basically does not move.

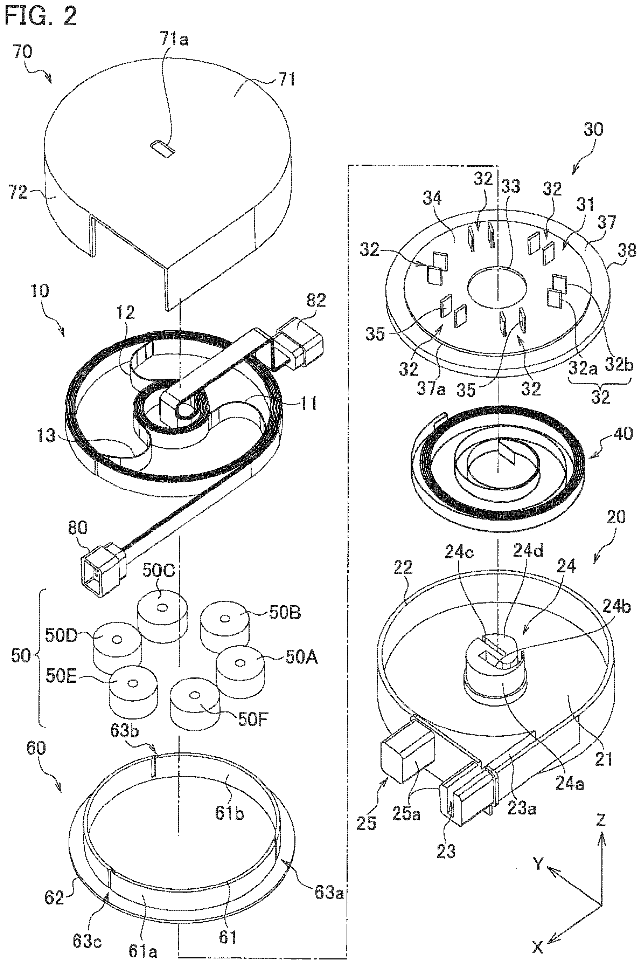

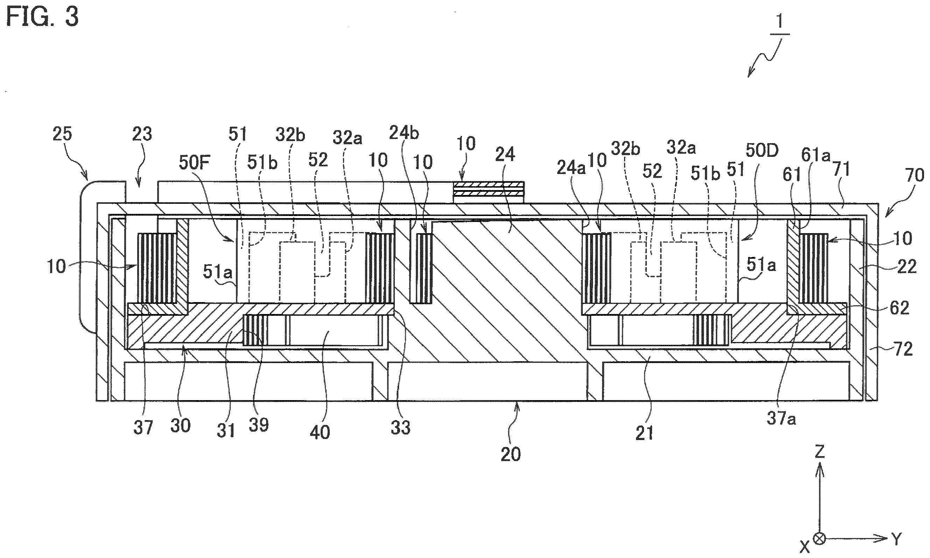

FIG. 2 is an exploded perspective view illustrating a configuration of the winding device 1. FIG. 3 is a cross-sectional view of the winding device 1 corresponding to a cross section taken along line III-III of FIG. 1. The winding device 1 includes the flat cable 10, a case 20, a rotation table 30, a spiral spring 40, a plurality of rollers 50, a rotation ring 60, and a cover 70.

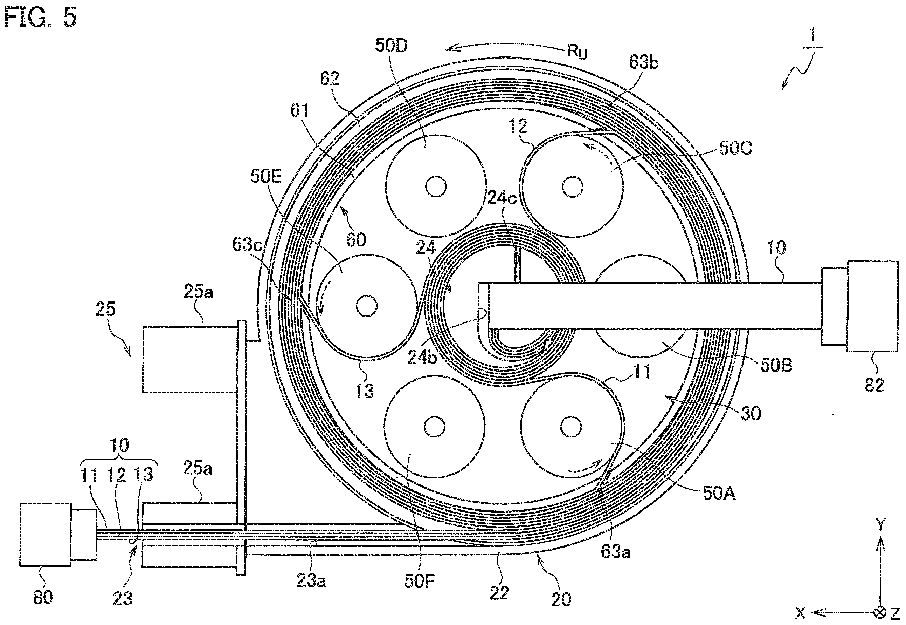

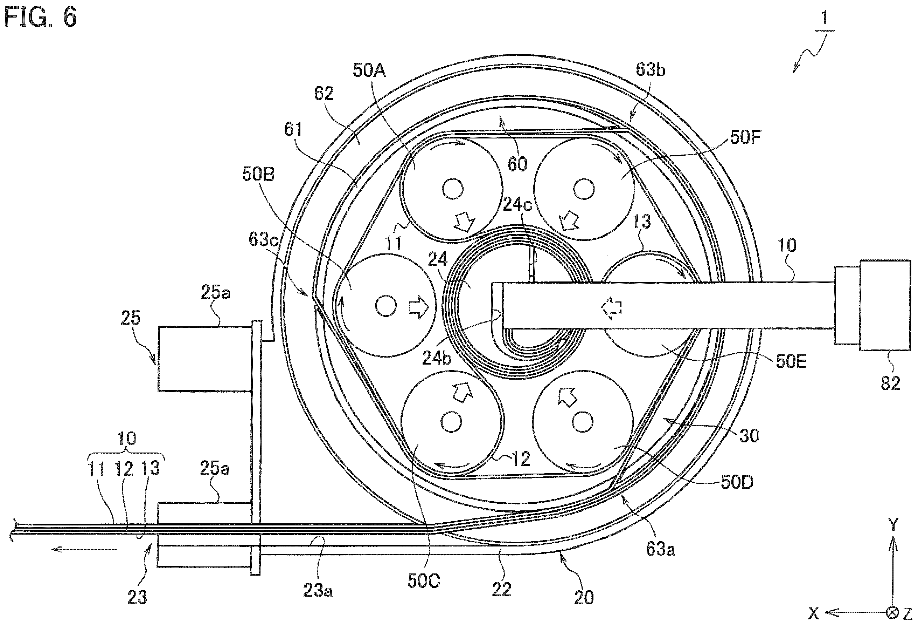

The flat cable 10 is a thin-band-shaped cable with flexibility. The flat cable 10 is formed of a combination of a plurality of single flat cables overlapped with each other in a plane direction. According to the present embodiment, the flat cable 10 includes, for example, three single flat cables including a first cable 11, a second cable 12, and a third cable 13 (see FIGS. 5 and 6). The first cable 11, the second cable 12, and the third cable 13 each include a plurality of core wires parallel to each other, and sheath portions for covering the respective core wires. The core wire is formed by twisting a plurality of conducting wires. The sheath portion is formed of a synthetic resin with an insulating property. It should be noted that the core wire or the sheath portion has any configuration or any shape.

The case 20 accommodates the rotation table 30, the spiral spring 40, the plurality of rollers 50, the rotation ring 60, and the wound flat cable 10. The case 20 includes a bottom portion 21, a circumferential wall portion 22, a cable leading portion 23, and a shaft portion 24.

The bottom portion 21 has a disc shape and faces the floor of the vehicle when the winding device 1 is horizontally installed on the floor. The circumferential wall portion 22 has a cylindrical shape with an axis perpendicular to a plane of the bottom portion 21 as a central axis, and is formed continuously from the bottom portion 21 along an outer circumference of the bottom portion 21.

The cable leading portion 23 leads the end of the flat cable 10 on which the first connector 80 is mounted to the outside. The cable leading portion 23 may be, for example, a portion constituting a connection portion 25 protruding from an outer surface of the circumferential wall portion 22. The connection portion 25 is, for example, a portion connected to the sliding rail when the winding device 1 is fixed to the sliding rail. Here, in the present embodiment, the connection portion 25 includes a projecting portion 25a actually engaged with a recessed portion provided on the slide rail, by way of example. The cable leading portion 23 may also be a part of the projecting portion 25a. The cable leading portion 23 includes a groove portion 23a through which the inside of the case 20 communicates with the outside of the case 20 and the flat cable 10 passes. The groove portion 23a guides the flat cable 10 in a direction in which the flat cable 10 is accommodated in the inside of the case 20, or in a direction in which the flat cable 10 is unwound toward the outside of the case 20.

The shaft portion 24 rotatably supports the rotation table 30. The shaft portion 24 has a cylindrical shape and is erected from an inner surface of a central portion of the bottom portion 21 in the inside of the case 20. The rotation table 30 can rotate while having the shaft portion 24 as a central axis and sliding an outer circumferential surface 24a of the shaft portion 24 and a hole 33 to be described later with respect to each other. In addition, the shaft portion 24 includes a slit 24b and an engagement groove 24c. A portion of the flat cable 10 adjacent to the second connector 82 is inserted into the slit 24b to be engaged with the slit 24b. The slit 24b is formed from the outer circumferential surface 24a toward the center and opened in an upper surface 24d. In a state in which the portion of the flat cable 10 adjacent to the second connector 82 is engaged with the slit 24b, the portion of the flat cable 10 adjacent to the second connector 82 is inserted into a through hole 71a formed in the cover 70 and led to the outside of the cover 70. One end of the spiral spring 40 is inserted into the engagement groove 24c and engaged with the engagement groove 24c. The engagement groove 24c is formed in a direction orthogonal to the slit 24b and opened in the upper surface 24d.

The rotation table 30 can rotate in the case 20 as described above. The rotation table 30 includes a table main body 31 and a plurality of guide portions 32.

The table main body 31 is a disc-shaped member. The table main body 31 includes the hole 33 which is provided at the central portion thereof and into which the shaft portion 24 of the case 20 is inserted. The hole 33 is a circular opening portion which is coaxial with an outer circumference of the table main body 31.

In addition, the table main body 31 includes a groove portion 37 with which the rotation ring 60 is coaxially and rotatably engaged. The groove portion 37 is on a level lower than that of an upper surface 34 of the table main body 31, and is a region formed from an outer circumferential end 38 of the table main body 31 toward an inner circumference by a predetermined distance. An outer diameter of a wall portion 37a of the groove portion 37 is slightly smaller than an inner diameter D1 of the rotation ring 60 so that the rotation ring 60 can slide with respect to the groove portion 37. Although not illustrated, a protrusion protruding from the groove portion 37 concentrically with the groove portion 37 in the Z direction may be formed on the groove portion 37 in order to reduce friction on a contact portion between the groove portion 37 and the rotation ring 60 and make sliding of the rotation ring 60 smoother. In addition, as illustrated in FIG. 3, the table main body 31 may include an accommodation groove 39 which accommodates the spiral spring 40 at a side of the table main body 31 facing the bottom portion 21 of the case 20.

The plurality of guide portions 32 rotatably support the rollers 50, respectively. In the present embodiment, the number of installed guide portions 32 is six, which corresponds to the number of installed rollers 50. The plurality of guide portions 32 are aligned at equal intervals in a rotation direction of the rotation table 30.

In addition, the plurality of guide portions 32 each include a pair of supports 32a and 32b protruding from the upper surface 34 of the table main body 31 in the Z direction. The pair of supports 32a and 32b rotatably and slidably supports the roller 50 in a radial direction of the table main body 31. For example, each of the pair of supports 32a and 32b is a column-shaped member and the pair of supports 32a and 32b has facing surfaces 35 facing each other while being spaced apart from each other in a direction orthogonal to the radial direction of the table main body 31. The pair of facing surfaces 35 extends in a direction parallel to the radial direction of the table main body 31. A distance between the pair of supports 32a and 32b, that is, a distance between the facing surfaces 35 is equivalent to a diameter of a shaft portion 52 (see FIG. 3) of the roller 50. A dimension of the facing surface 35 in an extending direction is larger than an inner diameter of roller 50. In a state in which the shaft portion 52 of the roller 50 is inserted between the facing surfaces 35, the shaft portion 52, that is, the roller 50 can rotate and can slide in the radial direction of the table main body 31.

The spiral spring 40 energizes the rotation table 30 in a winding direction of the flat cable 10. The spiral spring 40 is an energizing member formed by rolling elastic metal in a spiral shape. The spiral spring 40 is provided between the case 20 and the rotation table 30. An end portion of the spiral spring 40 adjacent to the center of the spiral spring 40 is inserted and fixed in the engagement groove 24c of the shaft portion 24 of the case 20. Meanwhile, an end portion of the spiral spring 40 adjacent to an outer circumference of the spiral spring 40 is engaged with a lower surface of the rotation table 30.

The plurality of rollers 50 each can rotate on the rotation table 30 while having the guide portion 32 as a reference axis. In the present embodiment, the number of rollers 50 is six, by way of example. The plurality of rollers 50 each include a circumferential wall portion 51 and the shaft portion 52 provided at an inner side of the circumferential wall portion 51. The circumferential wall portion 51 is formed continuously from the shaft portion 52 through, for example, an upper wall portion. The circumferential wall portion 51 has a cylindrical shape in which the guide portion 32 can be accommodated in the circumferential wall portion 51, and has an outer circumferential surface 51a with which the flat cable 10 comes into contact. The shaft portion 52 is a rotation axis of the roller 50 and has a cylindrical shape which is coaxial with the outer circumferential surface 51a.

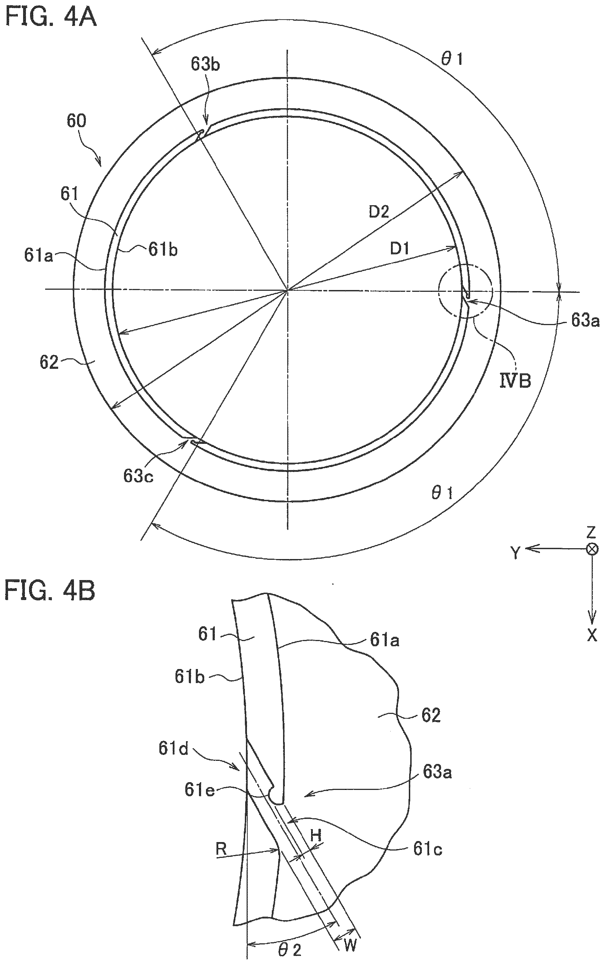

The rotation ring 60 is loaded on the rotation table 30 coaxially with the rotation table 30, and can rotate while winding the flat cable 10. FIG. 4A is a plan view illustrating an overall shape of the rotation ring 60. FIG. 4B is a plan view illustrating an enlarged view of a notched portion 63a. The rotation ring 60 includes a circumferential wall portion 61 and a flange portion 62.

The circumferential wall portion 61 has a cylindrical shape and has an outer circumferential surface 61a with which the flat cable 10 comes into contact. A portion of the flat cable 10 wound from the outside of the case 20 can be wound on the outer circumferential surface 61a of the circumferential wall portion 61. The plurality of rollers 50 are positioned at an inner circumferential side of the rotation ring 60. That is, an inner diameter D1 of the circumferential wall portion 61 has a value sufficient to make an inner circumferential surface 61b of the circumferential wall portion 61 not come into contact with the plurality of rollers 50 arranged at an inner side of the circumferential wall portion 61.

In addition, the circumferential wall portion 61 includes a notched portion 63 penetrating from an outer circumference side to an inner circumference side. The flat cable 10 is routed between the outer circumference side and the inner circumference side of the circumferential wall portion 61 through the notched portion 63. As in the present embodiment, in a case where the flat cable 10 is formed by overlapping a plurality of single flat cables, the number of notched portions 63 is plural and corresponds to at least the number of single flat cables overlapped with each other. In a case where the number of notched portions 63 is plural, it is preferable that the plurality of notched portions 63 are formed in the circumferential wall portion 61 at equal intervals in a circumferential direction. One of the plurality of single flat cables is routed through each of the plurality of notched portions 63.

For example, in the present embodiment, the flat cable 10 includes three single flat cables including the first cable 11, the second Cable 12, and the third cable 13 as the plurality of single flat cables. Here, as illustrated in FIG. 4A, the circumferential wall portion 61 includes three notched portions 63 including a first notched portion 63a, a second notched portion 63b, and a third notched portion 63c provided at equal intervals with an angle θ1 of 120° in the circumferential direction. The first cable 11 is routed through the first notched portion 63a. Similarly, the second cable 12 is routed through the second notched portion 63b, and the third cable 13 is routed through the third notched portion 63c.

The first notched portion 63a, the second notched portion 63b, and the third notched portion 63c have the same shape. As an example, a shape of the first notched portion 63a will be described with reference to FIG. 4B. First, the flat cable 10 is wound on the outer circumferential surface 61a of the circumferential wall portion 61 in a counterclockwise direction. In this case, an opening 61d adjacent to the inner circumferential surface 61b of the circumferential wall portion 61 is misaligned with respect to an opening 61c adjacent to the outer circumferential surface 61a in a counterclockwise direction so that the first cable 11 is smoothly routed from the outer circumference side of the circumferential wall portion 61 toward the inner circumference side of the circumferential wall portion 61. In other words, a direction in which the first notched portion 63a penetrates on an X-Y plane is inclined at an angle θ2 with respect to a tangential direction of the inner circumferential surface 61b of the circumferential wall portion 61.

In addition, the first cable 11, the second cable 12, and the third cable 13, which are routed, are held in the first notched portion 63a, the second notched portion 63b, and the third notched portion 63c, respectively. Here, the wording "hold" includes not only a case where the first cable 11 or the like is completely fixed to the notched portion 63, but also a case where the first cable 11 or the like is held while allowing a slight movement of the first cable 11 or the like depending on, for example, a tension force applied to the first cable 11 or the like.

For example, the circumferential wall portion 61 includes a protrusion 61e having a height H smaller than a width W of the notched portion 63a on the X-Y plane, inside the first notched portion 63a. In this case, a gap (W-H) on the X-Y plane generated inside the first notched portion 63a is slightly smaller than a thickness of the first cable 11. With this arrangement, the protrusion 61e presses the routed first cable 11 toward a wall surface in the first notched portion 63a facing the protrusion 61e, such that the first notched portion 63a can hold the first cable 11. It should be noted that the opening 61c, the opening 61d, or the protrusion 61e may be formed to have a curved surface to prevent an excessive load, which may cause damage to the first cable 11, the second cable 12, and the third cable 13 which are routed, from being applied. For example, a rounding-off process R may be performed on an end portion of the opening 61c in order to reduce a bending load applied to the first cable 11 from the end portion of the opening 61c.

The flange portion 62 is a plate-shaped flange which is parallel to the upper surface 34 of the rotation table 30, and is slidably engaged with the groove portion 37 formed in the rotation table 30. One end of the circumferential wall portion 61 is connected to an inner circumferential end of the flange portion 62. An outer diameter D2 of the flange portion 62 has a value sufficient to make the flange portion 62 not come into contact with the circumferential wall portion 22 of the case 20.

The cover 70 covers the upper surface of the case 20 and closes the case 20 so that the case 20 is hollow. The cover 70 includes a top board portion 71 having a substantial disc shape and a side wall portion 72 having a substantially cylindrical shape. As described above, the through hole 71a through which the flat cable 10 is led to the outside of the cover 70 is formed at a central portion of the top board portion 71. The side wall portion 72 is extended downward along an outer circumference of the top board portion 71 and is overlapped with the circumferential wall portion 22 of the case 20.

Next, an action according to the present embodiment will be described.

FIG. 5 is a plan view illustrating a wound state of the flat cable 10 in the winding device 1. FIG. 6 is a plan view illustrating a drawn state of the flat cable 10 in the winding device 1. It should be noted that the cover 70 is omitted in FIGS. 5 and 6 for convenience in order to clearly describe a motion inside the winding device 1. In the present embodiment, a winding direction Ru of the flat cable 10 is a counterclockwise direction by way of example. In addition, the number of turns of the flat cable 10 illustrated in FIGS. 5 and 6 is merely an example. For example, the number of turns can be appropriately changed depending on a setting of a maximum drawing length of the flat cable 10 drawn from the case 20. Further, in the wound state illustrated in FIG. 5, a state in which the flat cable 10 is wound up to a limit at which the flat cable 10 can be accommodated in the case 20 is assumed.

First, the wound state of the flat cable 10 in the winding device 1 will be described with reference to FIG. 5. In the present embodiment, a portion of the flat cable 10 which can be drawn from the case 20 is wound on the circumferential wall portion 61 of the rotation ring 60. Here, the portion of the flat cable 10 which can be drawn from the case 20 refers to a part of the entire flat cable 10 which is accommodated in the case 20 at the time of winding and is drawn from the case 20 to the outside at the time of drawing.

The flat cable 10 wound in the case 20 is wound on the outer circumferential surface 61a in the circumferential direction of the circumferential wall portion 61. In other words, the flat cable 10 of the first turn comes into contact with the outer circumferential surface 61a, and the flat cable 10 of the second and succeeding turns overlaps with the previously wound flat cable 10. Then, an end portion of the flat cable 10 at an outermost circumference passes through the groove portion 23a formed in the case 20 and is connected to the first connector 80 provided at the outside of the case 20.

Here, in the present embodiment, three single flat cables including the first cable 11, the second cable 12, and the third cable 13 are overlapped with each other to form the flat cable 10. The flat cable 10 of the first turn wound on the outer circumferential surface 61a of the rotation ring 60 is separated into the three single flat cables. The three single flat cables are routed to the inner circumference side of the circumferential wall portion 61 through different notched portions 63 independently of each other.

For example, the first cable 11 is routed to the inner circumference side of the circumferential wall portion 61 by passing through the first notched portion 63a. The first cable 11 routed to the inner circumference side is wound on a portion of the outer circumferential surface 51a of one of the plurality of rollers 50 in a circumferential direction and is inverted toward the shaft portion 24 provided at the central portion of the case 20. Hereinafter, the roller 50 inverting the first cable 11 will be referred to as an inverting roller 50A. The first cable 11 is wound on the outer circumferential surface 24a of the shaft portion 24 in advance by one turn or more. The first cable 11 inverted by the inverting roller 50A is connected to the first cable 11 wound on the shaft portion 24.

Similarly, the second cable 12 is routed to the inner circumference side of the circumferential wall portion 61 by passing through the second notched portion 63b. As described above, the second notched portion 63b is formed at an interval of 120° in the winding direction Ru from the first notched portion 63a through which the first cable 11 passes, along the circumferential direction of the rotation ring 60. The second cable 12 routed to the inner circumference side is wound on a portion of the outer circumferential surface 51a of one of the plurality of rollers 50, other than the inverting roller 50A, in a circumferential direction and is inverted toward the shaft portion 24 provided at the central portion of the case 20. Hereinafter, the roller 50 inverting the second cable 12 will be referred to as an inverting roller 50C. The second cable 12 is wound on the outer circumferential surface 24a of the shaft portion 24 in advance by one turn or more. The second cable 12 inverted by the inverting roller 50C is connected to the second cable 12 wound on the shaft portion 24.

In addition, the third cable 13 is routed to the inner circumference side of the circumferential wall portion 61 by passing through the third notched portion 63c. As described above, the third notched portion 63c is formed at an interval of 120° in the winding direction Ru from the second notched portion 63b through which the second cable 12 passes, along the circumferential direction of the rotation ring 60. The third cable 13 routed to the inner circumference side is wound on a portion of the outer circumferential surface 51a of one of the plurality of rollers 50, other than the inverting roller 50A and the inverting roller 50C, in a circumferential direction and is inverted toward the shaft portion 24 provided at the central portion of the case 20. Hereinafter, the roller 50 inverting the third cable 13 will be referred to as an inverting roller 50E. The third cable 13 is wound on the outer circumferential surface 24a of the shaft portion 24 in advance by one turn or more. The third cable 13 inverted by the inverting roller 50E is connected to the third cable 13 wound on the shaft portion 24.

In FIG. 5, a rotation direction of each of the inverting roller 50A, the inverting roller 50C, and the inverting roller 50E to implement the wound state is indicated by a dotted line.

The single flat cables inverted by the inverting roller 50A, the inverting roller 50C, and the inverting roller 50E, respectively, are overlapped with each other on the outer circumferential surface 24a of the shaft portion 24 again. As described above, an end portion of the flat cable 10 of the first turn which is wound on the outer circumferential surface 24a of the shaft portion 24 is engaged with the slit 24b formed in the shaft portion 24 and is led to the outside of the cover 70. The end portion of the flat cable 10 led to the outside of the cover 70 is connected to the second connector 82. That is, in the present embodiment, since the shaft portion 24 is formed integrally with the case 20, the portion of the flat cable 10 engaged with the slit 24b is not rotated in the circumferential direction of the shaft portion 24.

In addition, the plurality of rollers 50 are arranged at equal intervals in the circumferential direction of the rotation table 30 supporting the rollers 50, and the number of rollers 50 is six. Further, the first notched portion 63a, the second notched portion 63b, and the third notched portion 63c are formed at equal intervals in the circumferential direction of the rotation ring 60 rotating coaxially with the rotation table 30. For this reason, the inverting roller 50A, the inverting roller 50C, and the inverting roller 50E are also arranged at equal intervals of 120° in the circumferential direction of the rotation table 30 supporting the rollers 50.

Hereinafter, a roller adjacent to the inverting roller 50A and the inverting roller 50C among the plurality of rollers 50 is referred to as a guide roller 50B. Similarly, a roller adjacent to the inverting roller 50C and the inverting roller 50E is referred to as a guide roller 50D. Further, a roller adjacent to the inverting roller 50E and the inverting roller 50A is referred to as a guide roller 50F. As illustrated in FIG. 5, in a state in which the flat cable 10 is wound up to a limit at which the flat cable 10 can be accommodated in the case 20, the guide roller 50B, the guide roller 50D, and the guide roller 50F may not come into contact with the flat cable 10 in some timing.

The spiral spring 40 energizes the rotation table 30 in the winding direction Ru at the time of winding by an energizing force accumulated in the drawn state. The rotation table 30 and the rotation ring 60 engaged with the rotation table 30 rotate in the winding direction Ru by the energizing force. With this arrangement, the flat cable 10 drawn to the outside of the case 20 is wound on the rotation ring 60.

In addition, as described above, the other end of the flat cable 10 connected to the second connector 82 is engaged with the slit 24b in the shaft portion 24 and is not rotated. That is, in the winding device 1, even when winding one end of the flat cable 10 drawn to the outside of the case 20, it is necessary that the other end of the flat cable 10 is not rotated. In this regard, in the winding device 1, a pullable amount or a windable amount of the flat cable 10 from or on the shaft portion 24 is subtracted from a windable amount or a drawable amount of the flat cable 10 on or from the rotation ring 60.

Next, the drawn state of the flat cable 10 in the winding device 1 will be described with reference to FIG. 6. In FIG. 6, a state in which the flat cable 10 in the wound state illustrated in FIG. 5 is drawn to some extent is assumed.

A portion of the flat cable 10 drawn to the outside of the case 20 is a portion wound on the rotation ring 60. Here, the end portion of the flat cable 10 wound on the rotation ring 60 is separated into the first cable 11, the second cable 12, and the third cable 13, and the first cable 11, the second cable 12, and the third cable 13 are held in the notched portion 63a, the notched portion 63b, and the notched portion 63c, respectively. For this reason, the flat cable 10 at the inner circumferential side of the rotation ring 60, that is, the flat cable 10 wound on the shaft portion 24 is difficult to be drawn out to the outside of the case 20 at the time of drawing.

In addition, as the rotation ring 60 rotates, first, the rotation table 30 engaged with the rotation ring 60 is also rotated by a frictional force caused by contact between the rotation table 30 and the rotation ring 60 as a rotational force, at the time of the drawing. In addition, the first cable 11, the second cable 12, and the third cable 13 at the inner circumferential side of the rotation ring 60 are held in the first notched portion 63a, the second notched portion 63b, and the third notched portion 63c, respectively. For this reason, when defining the first notched portion 63a, the second notched portion 63b, and the third notched portion 63c as a cable fixing portion, the cable fixing portion applies tension forces to each of the first cable 11, the second cable 12, and the third cable 13 at the inner circumference side of the rotation ring 60, respectively. The tension forces are each applied to the inverting roller 50A, the inverting roller 50C, and the inverting roller 50E on which the first cable 11, the second cable 12, and the third cable 13 are wound, respectively. The inverting roller 50A, the inverting roller 50C, and the inverting roller 50E are supported on the rotation table 30, and thus the rotation table 30 rotates by receiving a rotational force.

Here, the rotation direction of the rotation ring 60 and the rotation direction of the rotation table 30 are the same as each other. However, an angular velocity of the rotation ring 60 and an angular velocity of the rotation table 30 are different from each other due to the rotational force acting on the rotation table 30. It should be noted that the rotation direction of the rotation ring 60 and the rotation direction of the rotation table 30 are the same as each other and the angular velocity of the rotation ring 60 and the angular velocity of the rotation table 30 are different from each other, not only at the time of drawing, but also at the time of winding.

Meanwhile, the inverting roller 50A rotates in the clockwise direction as indicated by an arrow in FIG. 6 by a tension force applied to the first cable 11 as the rotation ring 60 rotates. The inverting roller 50A winds and inverts the first cable 11 wound on the shaft portion 24 and sends the first cable 11 to the guide roller 50F provided adjacent to the inverting roller 50A in a direction opposite to the winding direction. The guide roller 50F winds the first cable 11 sent from the inverting roller 50A, and sends the first cable 11 to the inverting roller 50E provided adjacent to the guide roller 50F in the direction opposite to the winding direction without turning the first cable 11 around the guide roller 50F itself.

Similarly, the inverting roller 50C rotates in the clockwise direction by a tension force applied to the second cable 12 as the rotation ring 60 rotates. The inverting roller 50C winds and inverts the second cable 12 wound on the shaft portion 24 and sends the second cable 12 to the guide roller 50B provided adjacent to the inverting roller 50C in the direction opposite to the winding direction. The guide roller 50B winds the second cable 12 sent from the inverting roller 50C, and sends the second cable 12 to the inverting roller 50A provided adjacent to the guide roller 50B in the direction opposite to the winding direction. Here, as described above, the first cable 11 is already wound on the inverting roller 50A. For this reason, the second cable 12 sent from the guide roller 50B is overlapped with the first cable 11 at an outer circumference side of the first cable 11. In addition, similarly to the inverting roller 50A and the inverting roller 50C, the inverting roller 50E sends the third cable 13 to the guide roller 50D provided adjacent to the inverting roller 50E in the direction opposite to the winding direction.

That is, as the rotation ring 60 rotates at the time of drawing, the flat cable 10 wound on the shaft portion 24 in advance is sequentially pulled due to the rotation of the plurality of rollers 50 at the inner circumference side of the rotation ring 60. Further, the first cable 11, the second cable 12, and the third cable 13, which are pulled, are wound on the outer circumferences of the plurality of rollers 50 along the circumferential wall portion 61 of the rotation ring 60. Accordingly, the flat cable 10 of sufficient turns is wound on the shaft portion 24 in advance so that the flat cable 10 wound on the shaft portion 24 remains even when the flat cable 10 is drawn to the maximum drawing length. With this arrangement, one end of the flat cable 10 connected to the second connector 82 can be engaged with the slit 24b in the shaft portion 24 and thus be not rotated.

Whereas, when the flat cable 10 returns to the wound state again from the drawn state, the flat cable 10 drawn to the outside of the case 20 is wound on the rotation ring 60 by the energizing force of the spiral spring 40. Meanwhile, the first cable 11, the second cable 12, and the third cable 13 wound on the outer circumferences of the plurality of rollers 50 gradually return so as to be wound on the shaft portion 24. Then, the flat cable 10 returns to the wound state illustrated in FIG. 5

Next, an effect according to the present embodiment will be described.

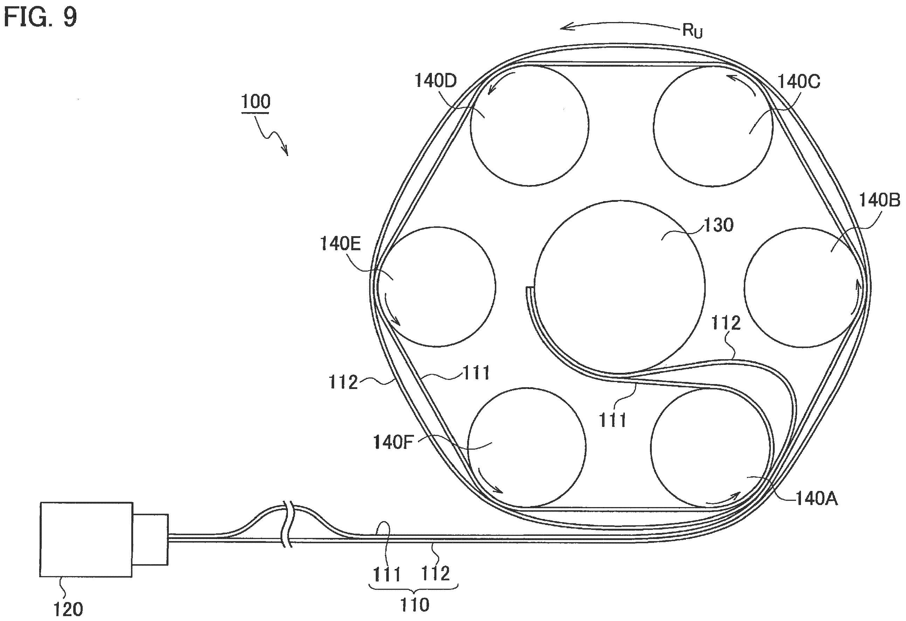

First, as a comparative example for the effect according to the present embodiment, a phenomenon which can occur at the time of winding a flat cable in the winding device according to the related art will be described. FIG. 9 is a schematic plan view illustrating a phenomenon which can occur at the time of winding the flat cable in the winding device 100 according to the related art as the comparative example.

The winding device 100 includes six rollers 140 which can rotate on a rotation table (not illustrated) which is similar to that of the present embodiment in a case (not illustrated) which is similar to that of the present embodiment. The six rollers 140 including a first roller 140A to a sixth roller 140E are arranged at equal intervals in a circumferential direction of the rotation table supporting the rollers, similarly to the present embodiment. The rotation table in this case rotates with a shaft portion 130 corresponding to the shaft portion 24 in the present embodiment as a central axis. Further, for convenience of explanation, in the winding device 100, two single flat cables including a first cable 111 and a second cable 112 are overlapped with each other to form a flat cable 110. It should be noted that one end of the flat cable 110 is connected to a connector 120 corresponding to the first connector 80 in the present embodiment. Meanwhile, the other end of the flat cable 110 is engaged with the shaft portion 130, similarly to the present embodiment.

Here, in the winding device 100 according to the related art, only the first roller 140A among the plurality of rollers 140 is an inverting roller. In this case, as illustrated in FIG. 9, the flat cable 110 is inverted by the first roller 140A and wound on outer circumferences of the plurality of rollers 140 at the time of winding. Accordingly, the wound flat cable 110 is pressed toward an inner circumference side of the case by a portion of an outer circumferential surface of each roller 140, and thus is considered as locally receiving a large load.

In addition, as illustrated in FIG. 9, in the winding device 100 according to the related art, there is a possibility that slack is generated in a portion of the drawn flat cable 110 between the first cable 111 and the second cable 112. For example, when an amount of the slack in this case becomes large, there is a possibility that the flat cable 110 comes into contact with the sliding rail. In a case where a contact load between the flat cable 110 and the sliding rail is increased, there is a possibility that the flat cable 110 finally buckles, and thus the generation of the slack is not preferable.

As a cause for the generation of the slack, first, for example, a path difference occurring in the flat cable 110 wound on the outer circumferences of the plurality of rollers 140 can be considered. In the flat cable 110 wound on the outer circumferences of the plurality of rollers 140, the first cable 111 is positioned at an inner circumference side and the second cable 112 is positioned at an outer circumference side. In this case, the first cable 111 of the inner circumference side is directly wound on the plurality of roller 140, and thus receives a large frictional force from the rollers 140. For this reason, as illustrated in FIG. 9, a whole plane shape of the first cable 111 of the first turn wound on the outer circumferences of the plurality of rollers 140 approximates a hexagon. Meanwhile, the second cable 112 of the outer circumference side is wound on the first cable 111 of the inner circumference side, and thus the frictional force at the time of winding is smaller than the frictional force directly received by the first cable 111 from the rollers 140. For this reason, as illustrated in FIG. 9, a whole plane shape of the second cable 112 of the first turn approximates a circle, in comparison to the plane shape of the first cable 111. That is, the difference between the plane shapes of the first cable 111 of the inner circumference side and the second cable 112 of the outer circumference side becomes the path difference, and the path difference affects a portion of the drawn flat cable 110, such that the slack is generated.

Second, a path difference occurring in the flat cable 110 wound on the first roller 140A which is the inverting roller can be considered. The first cable 111 is pressed toward the first roller 140A as the rotation table rotates, and thus is directly wound on an outer circumferential surface of the first roller 140A. In other words, the first cable 111 closely comes into contact with the first roller 140A while receiving a large frictional force from the first roller 140A. Meanwhile, the second cable 112 is wound on the first cable 111, and thus the frictional force at the time of winding is smaller than the frictional force directly received by the first cable 111 from the first roller 140A. For this reason, as illustrated in FIG. 9, the second cable 112 can be separated from the first roller 140A. That is, the separation of the second cable 112 occurring in the vicinity of the inverting roller becomes the path difference, and the path difference affects a portion of the drawn flat cable 110, such that the slack is generated.

Whereas, the winding device 1 according to the present embodiment includes the flat cable 10 and the case 20 in which one end of the flat cable 10 is wound and accommodated. The winding device 1 includes the shaft portion 24 which is provided in the case 20 and to which the other end of the flat cable 10 can be wound, and the rotation table 30 which can rotate with the shaft portion 24 as the central axis. The winding device 1 includes an energizing member 40 which energizes the rotation table 30 in the winding direction of the flat cable 10, and the plurality of rollers 50 arranged in the rotation direction of the rotation table 30 and rotatably supported on the rotation table 30, respectively. In addition, the winding device 1 includes the rotation ring 60 which positions the plurality of rollers 50 at the inner circumferential side thereof, can rotate coaxially with the shaft portion 24, and includes the circumferential wall portion 61 on which the flat cable 10 wound from the outside of the case 20 is wound. Here, the circumferential wall portion 61 includes the notched portion 63 through which the flat cable 10 is routed between the outer circumference side and the inner circumference side of the circumferential wall portion 61 and held. At least one of the plurality of rollers 50 is the inverting roller 50A winding the flat cable 10 wound on the shaft portion 24 and inverting the flat cable 10 toward the notched portion 63 as the rotation table 30 rotates.

In the winding device 1 according to the present embodiment, a portion of the flat cable 10 wound from the outside of the case 20 is wound on the circumferential wall portion 61 of the rotation ring 60. The circumferential wall portion 61 is a cylindrical wall which is smooth in the circumferential direction. Therefore, even in a case where the flat cable 10 is wound on the outer circumferential surface 61a of the circumferential wall portion 61, a large local load is hardly applied to the flat cable 10. For this reason, even in a case where the winding and the drawing of the flat cable 10 are performed multiple times, the flat cable 10 is hardly damaged or the like.

Therefore, according to the present invention, it is possible to provide the winding device 1 which is advantageous in improving durability of the flat cable 10, eventually improving durability of the entire winding device 1.

In addition, in the winding device 1 according to the present embodiment, in a case where the flat cable 10 is formed by overlapping a plurality of single flat cables with each other, the slack is hardly generated in a portion of the flat cable 10 drawn to the outside of the case 20.

The reason why the slack is hardly generated is that for example, the portion of the flat cable 10 wound from the outside of the case 20 is wound on the circumferential wall portion 61 of the rotation ring 60 as described above. In the wound flat cable 10, the plurality of single flat cables are wound while each having a plane shape corresponding to a circumference shape of the circumferential wall portion 61, and thus receive the same frictional force from the rotation ring 60. Therefore, according to the present embodiment, the path difference, which can occur in the flat cable 110 wound on the outer circumferences of the plurality of rollers 140 in the winding device 100 according to the related art as described with reference to FIG. 9, hardly occurs. As a result, the slack is hardly generated in the case 20, and thus the slack is hardly generated also in the drawn flat cable 10.

In addition, the reason why the slack is hardly generated in the drawn flat cable 10 is that a region in which the flat cable 10 is wound from the outside from the case 20 and a region in which the flat cable 10 is inverted inside the case 20 are different from each other. In the present embodiment, the plurality of single flat cables are held in the corresponding notched portions 63 formed in the circumferential wall portion 61 of the rotation ring 60, respectively. The plurality of single flat cables are each divided into a region in which the single flat cables are wound on the outer circumferential surface 61a of the circumferential wall portion 61 and a region in which the single flat cables are inverted at the inner circumferential side of the circumferential wall portion 61, by the notched portions 63 as a boundary. Therefore, according to the present embodiment, even in a case where the slack is generated in the plurality of single flat cables in the region in which the flat cable 10 is inverted, the slack hardly affects the flat cable 10 wound on the outer circumferential surface 61a of the circumferential wall portion 61. As a result, the slack is hardly generated in the drawn flat cable 10.

Further, according to the present embodiment, in the winding device 1, one end of the flat cable 10 adjacent to the first connector 80 can be wound and the other end of the flat cable 10 adjacent to the second connector 82 is held. In order to implement such a mechanism, the winding device 1 includes the plurality of rollers 50 including the inverting roller. For this reason, as illustrated in FIG. 3, in the case 20, the flat cable 10 is aligned in line with respect to a rotation axis direction of the rotation table 30 or the rotation ring 60, which corresponds to a Z axis. Therefore, a thickness of the winding device 1 in the Z direction can be small.

In addition, in the winding device 1 according to the present embodiment, the flat cable 10 may be formed by overlapping the plurality of single flat cables with each other. The circumferential wall portion 61 may include the plurality of notched portions 63. One of the plurality of single flat cables may be routed through each of the plurality of notched portions 63, and the number of inverting rollers may be plural and may correspond to the number of single flat cables.

The plurality of single flat cables correspond to the first cable 11, the second cable 12, and the third cable 13 in the above described example. In this case the plurality of notched portions 63 correspond to the first notched portion 63a, the second notched portion 63b, and the third notched portion 63c.

Here, as a comparative example, suppression of the generation of the slack between the first cable 111 and the second cable 112 at the first roller 140A in the winding device 100 according to the related art illustrated in FIG. 9 is considered. For example, the first roller 140A can invert the second cable 112 of the outer circumference side and the second roller 140B can invert the first cable 111 of the inner circumference side. In this case, particularly at the time of drawing, a tension force caused by drawing of the flat cable 110 is applied to the first roller 140A, such that the slack is hardly generated in the first cable 111. However, the tension force caused by the drawing is not directly applied to the second roller 140B, and the second cable 112 is inverted by the frictional force caused by the contact with the first cable 111 guided from the first roller 140A. For this reason, there is a possibility that the slack is generated in the second cable 112 in the vicinity of the second roller 140B or the shaft portion 130. The generation of the slack as described above causes frictional resistance among the plurality of flat cables in the vicinity of the shaft portion 130 and inhibits a smooth operation, which is not preferable.

Whereas, in the winding device 1 according to the present embodiment, the inverting rollers corresponding to the plurality of single flat cables, respectively, directly invert the single flat cables, respectively. However, in a region in which the flat cable 10 is inverted, the plurality of single flat cables each directly receive the tension force caused by the drawing at the time of drawing, and thus, particularly, the slack generated in the vicinity of the shaft portion 24 can be suppressed.

In the present embodiment, the flat cable 10 is constituted by the plurality of single flat cables. However, the present invention is not limited thereto, and the flat cable 10 may be constituted by one flat cable.

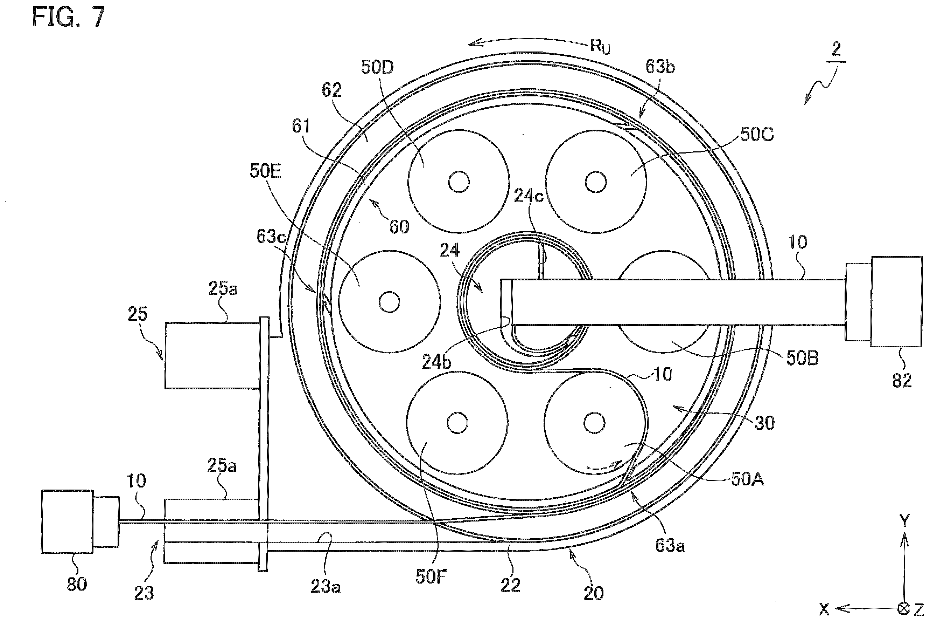

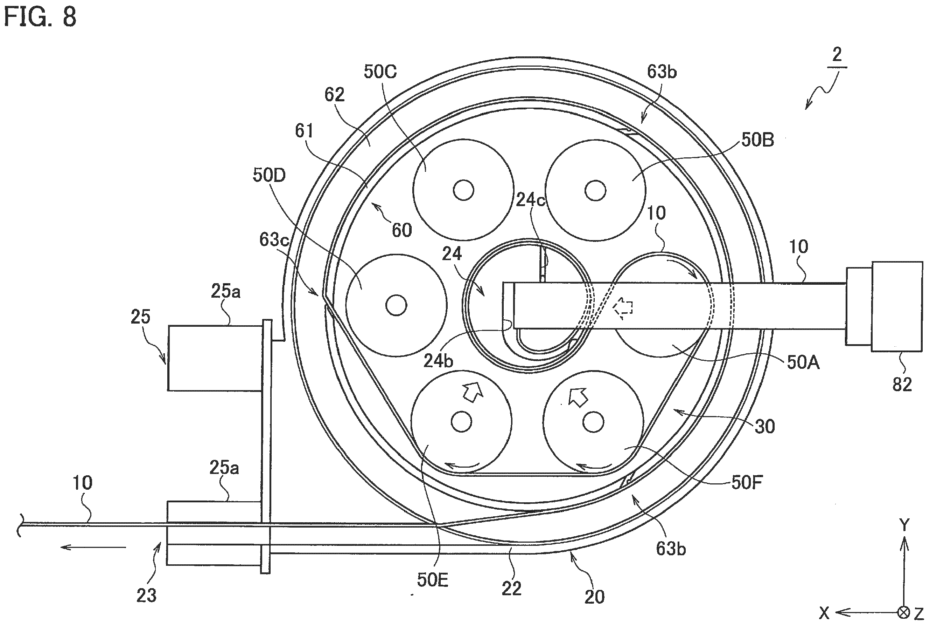

FIG. 7 is a plan view illustrating a wound state of a flat cable 10 in a flat cable winding device 2 according to a second embodiment, the flat cable 10 being constituted by one flat cable. FIG. 8 is a plan view illustrating a drawn state of the flat cable 10 in the winding device 2. The winding device 2 according to the second embodiment is different from the winding device 1 according to the first embodiment illustrated in FIGS. 5 and 6 only in regard to a configuration of the flat cable 10 . It should be noted that in a case where the flat cable 10 is constituted by one flat cable, a used notched portion 63 is only a first notched portion 63a.

In the winding device 2 as described above, a portion of the flat cable 10 wound from the outside of a case 20 is wound on a circumferential wall portion 61 of a rotation ring 60, similarly to the winding device 1. Therefore, the winding device 2 is advantageous in improving durability of the flat cable 10, eventually improving durability of the entire winding device 2.

In addition, in the winding device 1 according to the first embodiment, the plurality of notched portions 63 are arranged at equal intervals in the circumferential direction of the circumferential wall portion 61.

In the winding device 1 as described above, forces each applied from the single flat cables to the plurality of notched portions 63 are equal. Therefore, it is easy to maintain a substantially circular plane shape of the flat cable 10 wound on the circumferential wall portion 61, such that it is possible to suppress the generation of the slack at the circumferential wall portion 61.

As in the example described above, in a case where the flat cable 10 is constituted by three single flat cables, three notched portions 63 are formed in the circumferential wall portion 61 of the rotation ring 60 at intervals of 120° in the circumferential direction. In this case, the inverting roller 50A, the inverting roller 50C, and the inverting roller 50E among the six rollers 50 are also arranged at equal intervals of 120° in the circumferential direction of the rotation table 30.

Meanwhile, for example, in a case where the flat cable 10 is constituted by two single flat cables, two notched portions 63 may be formed in the circumferential wall portion 61 of the rotation ring 60 at intervals of 180° in the circumferential direction. In this case, it is necessary that two of the six rollers 50 are inverting rollers. Here, in a case where one of the two inverting rollers is the inverting roller 50A similarly to the case described above, the guide roller 50D formed at an interval of 180° from the inverting roller 50A in the circumferential direction of the rotation table 30 may be used as the other one inverting roller.

Although it is assumed that the number of plurality of installed rollers 50 is six by way of example in the embodiments described above, the present invention is not limited thereto. However, as the number of installed rollers 50 is increased, there is a possibility that the number of components is increased and a size of the case 20 is increased, and thus it is suitable that the number of installed rollers 50 is six.

Although the preferred embodiments of the present invention have been described above, the present invention is not limited to these embodiments, and various modifications and changes are possible within departing from the gist of the present invention.

## Claims

1. A flat cable winding device comprising:
a flat cable;
a case in which a first end of the flat cable is wound and accommodated;
a shaft portion provided in the case and on which a second end of the flat cable is wound;
a rotation table being rotatable about the shaft portion as a central axis;
an energizing member energizing the rotation table in a winding direction of the flat cable;
a plurality of rollers arranged in a rotation direction of the rotation table and rotatably supported on the rotation table; and
a rotation ring positioning the plurality of rollers at an inner circumferential side of the rotation ring, being coaxially rotatable about the shaft portion, and including a circumferential wall portion around which the flat cable wound from the outside of the case is wound,
wherein the circumferential wall portion includes a notched portion through which the flat cable is routed between an outer circumference side and an inner circumference side of the circumferential wall portion and held, and
the plurality of rollers includes at least one inverting roller configured to wind the flat cable wound around the shaft portion and to invert the flat cable toward the notched portion as the rotation table rotates.

2. The flat cable winding device according to claim 1, wherein the flat cable is formed by overlapping a plurality of single flat cables with each other,
the circumferential wall portion includes a plurality of the notched portions in a one-to-one manner,
each single flat cable of the plurality of single flat cables is routed through each notched portion of the plurality of the notched portions, and
the inverting roller is equipped plural and the number of inverting rollers corresponds to the number of single flat cables included in the plurality of single flat cables.

3. The flat cable winding device according to claim 2, wherein the plurality of the notched portions are formed at equal intervals in a circumferential direction of the circumferential wall portion.
